# EUROPEAN PATENT APPLICATION

(11) **EP 2 465 595 A1**
(43) Date of publication of application: **20.06.2012**
(21) Application number: 10195235.6
(22) Date of filing: 15.12.2010
(51) Int. Cl.: B01D 53/14, B01D 53/62, C01B 3/52, C10G 2/00

(54) **PROCESS FOR CAPTURE AND COMPRESSION OF CARBON DIOXIDE FROM FISCHER-TROPSCH OFF-GAS**

(71) Applicant: Shell Internationale Research Maatschappij B.V., 2596 HR Den Haag (NL)
(72) Inventor: Di Nola, Gianluca, 1031 HW Amsterdam (NL)
(74) Representative: Matthezing, Robert Maarten

(57) **Abstract**

This invention concerns a process for removing carbon dioxide from Fischer-Tropsch off-gas comprising the following steps:
i) conversion of a hydrocarbonaceous feed to obtain synthesis gas;
ii) catalytic conversion of the synthesis gas obtained in step i) using a Fischer-Tropsch catalyst into a Fischer-Tropsch product;
iii) separating the Fischer-Tropsch product of step ii) into hydrocarbon product and a Fischer-Tropsch off-gas;
iv) subjecting the Fischer-Tropsch off-gas to a water gas shift reaction resulting in a carbon monoxide depleted off-gas;
v) contacting the Fischer-Tropsch off-gas obtained in step iv) with a lean carbon dioxide capture sorbent to obtain a carbon dioxide depleted Fischer-Tropsch off-gas and loaded sorbent;
vi) regenerating the loaded sorbent to obtain a carbon dioxide rich stream and lean carbon dioxide capture sorbent; and
vii) compressing the carbon dioxide rich stream obtained in step vi),
in which process a back pressure steam turbine generates low pressure steam for regenerating loaded sorbent in step vi) and mechanical energy for compressing the carbon dioxide rich stream in step vii).

## Description

The present invention relates to a process for processing Fischer-Tropsch off-gas.

The Fischer-Tropsch process can be used for the conversion of hydrocarbonaceous feeds into normally liquid and/or solid hydrocarbons as measured at 0°C and atmospheric pressure). The feed such as natural gas, associated gas, coal-bed methane, residual oil fractions, biomass and/or coal, is converted in a first step into a mixture of hydrogen and carbon monoxide. This mixture is often referred to as synthesis gas or syngas. The synthesis gas is fed into a reactor where it is converted at elevated temperature and pressure and the use of a suitable catalyst into paraffinic compounds ranging from methane to high molecular weight molecules comprising up to 200 carbon atoms, or, under particular circumstances, even more.

The hydrocarbon products manufactured in the Fischer-Tropsch process are processed into different fractions, for example a liquid hydrocarbon stream comprising mainly hydrocarbons containing at least 5 carbon atoms, and a gaseous hydrocarbon stream which comprises carbon monoxide, carbon dioxide, unconverted methane, and hydrocarbons containing at most 4 carbon atoms. The gaseous hydrocarbon stream is often referred to as Fischer-Tropsch off-gas. This Fischer-Tropsch off-gas can be subjected to a water gas shift reaction to increase its carbon dioxide content. The water gas shift reaction involves mixing the Fischer-Tropsch off-gas with steam to convert CO present in the off-gas and form H₂ and CO₂.

A disadvantage of the Fischer-Tropsch off-gas thus obtained is its high CO₂ content. The CO₂ content has to be reduced to make it better suited for many of its potential applications such as recycle to syngas manufacture, use as fuel or use in steam methane reforming. It is advantageous to capture CO₂ before using the Fischer-Tropsch off-gas as fuel as the amount of flue gas obtained in the combustion is at the moment considered too large to treat.

Carbon dioxide can be removed from Fischer-Tropsch off-gas with the help of a sorbent to obtain a carbon dioxide depleted Fischer-Tropsch off-gas and a carbon dioxide rich stream.

The capture of carbon dioxide from a gaseous stream with the help of a sorbent requires a large amount of energy used in regeneration of the sorbent. In order to regenerate the loaded solvent, boilers are conventionally used to provide the heat required, normally in the form of steam. The boilers operate by combusting a hydrocarbon fuel which generates additional carbon dioxide.

Surprisingly, it has now been found that back pressure steam turbines are very advantageous for supplying energy in the removal of carbon dioxide from Fischer-Tropsch off-gas.

Back pressure steam turbines are also referred to as non-condensing turbines. The basic principle of turbines is that water is heated to obtain compressed steam which is sent to a turbine. The pressure of the steam is reduced by expansion over the turbine blades thereby producing electricity, and the low pressure steam is condensed back to liquid. Back pressure steam turbines differ from conventional steam turbines in that the steam is expanded over a turbine to such pressure as to meet the needs of a facility. This makes that back pressure steam turbines convert high pressure steam into both mechanical energy and lower pressure. The lower pressure steam is used in other parts of the plant instead of being condensed to liquid.

It has now been found that a back pressure steam turbine is especially advantageous for supplying energy in the removal of carbon dioxide from Fischer-Tropsch off-gas in that the mechanical energy is used for compressing carbon dioxide while the lower pressure steam is used in regenerating the carbon dioxide sorbent.

Therefore, the present invention relates to a process for removing carbon dioxide from Fischer-Tropsch off-gas comprising the following steps:
i) conversion of a hydrocarbonaceous feed to obtain synthesis gas;
ii) catalytic conversion of the synthesis gas obtained in step i) using a Fischer-Tropsch catalyst into a Fischer-Tropsch product;
iii) separating the Fischer-Tropsch product of step ii) into hydrocarbon product and a Fischer-Tropsch off-gas;
iv) subjecting the Fischer-Tropsch off-gas to a water gas shift reaction resulting in a carbon monoxide depleted off-gas;
v) contacting the Fischer-Tropsch off-gas obtained in step iv) with a lean carbon dioxide capture sorbent to obtain a carbon dioxide depleted Fischer-Tropsch off-gas and loaded sorbent;
vi) regenerating the loaded sorbent to obtain a carbon dioxide rich stream and lean carbon dioxide capture sorbent; and
vii) compressing the carbon dioxide rich stream obtained in step vi),

in which process a back pressure steam turbine generates low pressure steam for regenerating the loaded sorbent in step vi) and mechanical energy for compressing the carbon dioxide rich stream in step vii).

The amount of carbon dioxide which is to be compressed differs in the course of time as the composition of the off-gas which is treated differs in the course of time. Therefore, it is beneficial to be able to modulate the energy of the back pressure steam turbine which is not required. For this reason, a preferred embodiment of the present invention comprises the use of an additional electrical generator which converts surplus mechanical energy of the back pressure steam turbine into electricity. It is further preferred to additionally have a helper motor which can convert stored electrical energy back into mechanical energy if the back pressure steam turbine does not provide sufficient energy for carbon dioxide compression.

The low pressure steam for regenerating loaded sorbent will generally have a pressure of from 1 to 7 bar absolute, more specifically of from 2 to 7 bar. The back pressure steam turbine preferably is fed with high pressure steam, preferably having a pressure of at least 30 bar absolute, more specifically at least 40 bar.

Synthesis gas can be produced by methods such as steam reforming of natural gas or liquid hydrocarbons and gasification of coal. Preferably, hydrocarbonaceous feed is converted to synthesis gas by partial oxidation at elevated temperature and pressure using an oxygen containing gas. Partial oxidation can take place according to various established processes. Catalytic as well as non-catalytic processes may be used. These processes include the so-called Shell Gasification Process.

The H₂/CO ratio of the synthesis gas produced preferably is of from 1.5 to 2.3, more preferably of from 1.8 to 2.1.

The catalysts for catalytic conversion of the synthesis gas into a Fischer-Tropsch product are known in the art and are usually referred to as Fischer-Tropsch catalysts. Preferably, the catalysts for use in the Fischer-Tropsch hydrocarbon synthesis process comprises as the catalytically active component cobalt. The catalytically active component is preferably supported on a porous carrier, e.g. silica or titania. If desired, the Fischer-Tropsch catalyst may also comprise one or more metals or metal oxides as promoters. Typically, the catalytic conversion may be effected at a temperature in the range of from 150 to 350 °C, preferably of from 180 to 270 °C. Typical total pressures for the catalytic conversion process are in the range of from 1 to 200 bar absolute, more preferably from 10 to 70 bar absolute.

The Fischer-Tropsch product is separated into a hydrocarbon product which can be removed from the process, and a Fischer-Tropsch off-gas. The separation can be carried out in any known to be suitable for the specific Fischer-Tropsch product for example with the help of a gas/liquid separator.

The Fischer-Tropsch off-gas generally comprises gaseous hydrocarbons, nitrogen, unconverted methane, unconverted carbon monoxide, carbon dioxide, hydrogen and water. The gaseous hydrocarbons are suitably hydrocarbons comprising of from 1 to 5 carbon atoms, preferably hydrocarbons comprising of from 1 to 4 carbon atoms, more preferably hydrocarbons comprising of from 1 to 3 carbon atoms. These hydrocarbons, or mixtures thereof, are gaseous at atmospheric pressure at temperatures of from 5 to 30 °C , especially at 20 °C. Further, oxygenated compounds, e.g. methanol, dimethylether, may be present.

In one embodiment of the invention the Fischer-Tropsch off-gas of step iii) is subjected to steam methane reforming prior to the water gas shift reaction of step iv). Steam methane reforming involves reacting steam with methane at high temperature, specifically of from 700 to 100 C, and in the presence of a catalyst to yield carbon monoxide and hydrogen.

The separated Fischer-Tropsch off-gas is suitably subjected to a water gas shift reaction which involves mixing the Fischer-Tropsch off-gas with steam and is preferably carried out at a pressure in the range of from 10 bar to 30 bar and a temperature of from 150°C to 250°C.

It is advantageous to remove carbon dioxide from the Fischer-Tropsch gas which has been subjected to a water gas shift reaction and before further use.

Any process known to be suitable can be used to capture and remove carbon dioxide from Fischer-Tropsch off-gas. The expression sorption is not to be interpreted in a limiting way. It will be clear to someone skilled in the art that any compound can be used which selectively captures and removes carbon dioxide from the Fischer-Tropsch off-gas. Therefore, the present invention also relates to compounds which arguably use adsorption or chemical conversion for capture and removal of carbon dioxide. Processes which are especially suitable are process comprising treating gas with regenerative aqueous solutions containing at least one amine thereby. Commercially available processes are the CANSOLV CO₂ Capture process (CANSOLV is a trademark of Cansolv Technologies Inc.), the ADIP process, the ADIP-X process and/or the SULFINOL process (ADIP and SULFINOL are Shell trademarks).

In a specific embodiment of the invention the Fischer-Tropsch off-gas is subjected to the carbon dioxide removal at a temperature in the range of from 40 °C to 100 °C and at a pressure in the range of from 40 to 80 bar.

The lean sorbent becomes a loaded sorbent by capturing carbon dioxide from the Fischer-Tropsch off-gas. The loaded sorbent can be regenerated in any way known to be suitable for the sorbent in question.

The compressed carbon dioxide rich stream obtained in step (vii) may be stored or re-used. Carbon dioxide storage may for example, include gaseous storage in various deep geological formations (including saline formations and exhausted gas fields), liquid storage in the ocean, and/or solid storage by reaction of carbon dioxide with metal oxides to produce stable carbonates. Carbon dioxide storage is often referred to as carbon dioxide sequestration, which is usually part of carbon capture and storage processes (CCS). Additionally or alternatively, carbon dioxide may be re-used for enhanced oil recovery and/or for plant growth and production within a greenhouse environment and/or for pelleting and using in industrial cooling applications.

Preferably, at least 70 vol.%, more preferably at least 80 vol.%, even more preferably at least 90 vol.% of carbon dioxide is removed from the Fischer-Tropsch off-gas, calculated on the total amount of carbon dioxide in the Fischer-Tropsch off-gas.

The carbon dioxide depleted Fischer-Tropsch off-gas can be recycled to the syngas manufacture, in which process the hydrocarbonaceous feed is converted into synthesis gas. Preferably, between 50 and 90 vol.%, more preferably between 60 and 80 vol.%, of the carbon dioxide depleted Fischer-Tropsch off-gas obtained in step (v) is subjected to syngas manufacturing.

Alternatively, the carbon dioxide depleted Fischer-Tropsch off-gas can be used as fuel for generating energy. Preferably, between 5 and 50 vol.%, more preferably between 10 and 40 vol.%, of the carbon dioxide depleted Fischer-Tropsch off-gas obtained in step (v) is used as fuel.

In this way, not only the part of the Fischer-Tropsch off-gas that is recycled to the syngas manufacture is treated for carbon dioxide removal but also the part which is used for generating energy. The CO₂ is removed from the Fischer-Tropsch off-gas at high pressure before this Fischer-Tropsch off-gas is combusted for generating energy instead of using the difficult and expensive process for removal of CO₂ from the flue gas.

## Claims

1. A process for removing carbon dioxide from Fischer-Tropsch off-gas comprising the following steps:
i) conversion of a hydrocarbonaceous feed to obtain synthesis gas;
ii) catalytic conversion of the synthesis gas obtained in step i) using a Fischer-Tropsch catalyst into a Fischer-Tropsch product;
iii) separating the Fischer-Tropsch product of step ii) into hydrocarbon product and a Fischer-Tropsch off-gas;
iv) subjecting the Fischer-Tropsch off-gas to a water gas shift reaction resulting in a carbon monoxide depleted off-gas;
v) contacting the Fischer-Tropsch off-gas obtained in step iv) with a lean carbon dioxide capture sorbent to obtain a carbon dioxide depleted Fischer-Tropsch off-gas and loaded sorbent;
vi) regenerating the loaded sorbent to obtain a carbon dioxide rich stream and lean carbon dioxide capture sorbent; and
vii) compressing the carbon dioxide rich stream obtained in step vi),
in which process a back pressure steam turbine generates low pressure steam for regenerating the loaded sorbent in step vi) and mechanical energy for compressing the carbon dioxide rich stream in step vii).

2. The process of claim 1, which process further comprises the use of an electrical generator which converts surplus mechanical energy of the back pressure steam turbine into electricity and a helper motor.
